# FASCICULE DE BREVET EUROPEEN

(11) **EP 0 874 726 B1**
(45) Date de publication et mention de la délivrance du brevet: **29.03.2000**
(21) Numéro de dépôt: 97900219.3
(22) Date de dépôt: 02.01.1997
(51) Int. Cl.: B29C 67/00, B29C 41/12

(54) **PROCEDE DE PROTOTYPAGE RAPIDE POUR LA PRODUCTION DE PIECES INDUSTRIELLES ET DISPOSITIF POUR SA MISE EN OEUVRE**
PROTOTYP-SCHNELLBAUVERFAHREN UND VORRICHTUNG FÜR DESSEN AUSFÜHRUNG
RAPID PROTOTYPING PROCESS FOR THE PRODUCTION OF INDUSTRIAL PARTS AND DEVICE FOR IMPLEMENTING SUCH PROCESS

(30) Priorité: 03.01.1996 FR 9600107
(43) Date de publication de la demande: 04.11.1998
(73) Titulaire: Allanic, André-Luc, 54000 Nancy (FR); Schaeffer, Jean-Philippe, 54700 Atton (FR)
(72) Inventeur: Allanic, André-Luc, 54000 Nancy (FR); Schaeffer, Jean-Philippe, 54700 Atton (FR)
(74) Mandataire: Peuscet, Jacques
(86) Numéro de dépôt international: FR9700001
(87) Numéro de publication internationale: WO9725194

(56) Documents cités:
- EP-A- 0 431 924
- EP-A- 0 484 182
- EP-A- 0 554 033
- WO-A-93/25377
- DE-U- 9 319 405
- US-A- 5 204 124
- US-A- 5 204 823

## Description

La présente invention concerne un procédé prototypage rapide selon le préambule de la revendication 1 et un dispositif pour sa mise en oeuvre selon le préambule de la revendication 9.

Il est connu de réaliser automatiquement des objets ou des pièces industrielles par transformation de couches successives de matière première d'un premier état en un second état à partir de données informatiques représentant leur forme. Les machines utilisant ce principe, appelées machines de Prototype Rapide, procèdent en grande majorité par répétition d'un cycle comprenant les étapes suivantes :
- phase de recouvrement au cours de laquelle l'empilement de couches déjà réalisé au cours des étapes précédentes est recouvert par une couche de matière première non transformée ;
- phase de transformation partielle de la nouvelle couche grâce à un dispositif qui émet des rayonnements électromagnétiques ou des particules de matière en direction de la face de ladite couche qui n'est pas en contact avec les couches précédentes.

On trouve par exemple, dans la demande internationale PCT WO 93/25377, qui sera prise comme base du préambule des revendications 1 et 9, la description d'une machine de prototypage rapide utilisant l'action d'un rayonnement lumineux pour solidifier partiellement des couches successives de résine liquide contenue dans une cuve. Le dispositif induisant les transformations est constitué d'un générateur de lumière et d'un système optique, qui permet de diriger les photons émis par ledit générateur de lumière sur une portion de la surface libre du liquide correspondant avec la coupe de la pièce à réaliser. Après chaque phase de transformation, un support solidaire des couches déjà partiellement solidifiées est déplacé verticalement par l'intermédiaire d'un système motorisé pour abaisser l'altitude de la pièce en cours de création par rapport à celle de la surface libre du liquide. Ce mouvement ne suffit bien souvent pas à réaliser le recouvrement par la résine liquide des parties venant d'être solidifiées et à assurer une planéité suffisante de la surface libre de liquide pour pouvoir procéder à la phase de transformation suivante. C'est pourquoi on déplace, selon un mouvement sensiblement horizontal, par l'intermédiaire d'un dispositif mécanique motorisé, une pièce mécanique de forme allongée appelée racleur, dont la partie inférieure est en contact avec la résine, de manière à balayer progressivement l'ensemble de la surface accessible au dispositif induisant les transformations, et obtenir le recouvrement et la planéité désirés avant de procéder à de nouvelles transformations. L'ensemble des organes de la machine est piloté par un ordinateur, qui utilise des données informatiques issues (par traitement logiciel) des données initiales, qui déterminent la forme des pièces à réaliser.

Le document PCT WO 93/25377 propose différents modes de réalisation du racleur ; notamment, sur la figure 13 de ce document, on a décrit un racleur constitué par un support rigide entrant en contact avec la résine, par l'intermédiaire d'une pluralité de films souples appelés mouilleurs. La demande EP-A-0 484 182 contient également la description d'un racleur : ce racleur et constitué de deux supports rigides disposés parallèlement entre eux et situés proches l'un de l'autre, auxquels sont fixés des éléments de brosses qui entrent en contact avec la résine par leur partie inférieure.

Il existe des procédés de Prototypage Rapide utilisant des résines photosensibles pour lesquels le recours à un racleur n'est pas indispensable. Par exemple, dans le document DE-U-9 319 405 est décrit un procédé consistant à effectuer les transformations non pas au voisinage de la surface libre de résine, mais au voisinage du fond de la cuve contenant la résine, cette cuve étant équipée dans sa partie inférieure d'un hublot transparent au rayonnement induisant les transformations. Dans ces conditions, il est très difficile de s'affranchir des phénomènes indésirables d'adhérence entre les parties solidifiées et ledit hublot, ce qui conduit à des limitations en termes de fiabilité des machines et de forme des pièces à réaliser.

Le document US-A-5 204 124 propose également un procédé dans lequel il est inutile de recourir à l'emploi d'un racleur. Dans ce procédé, une buse liée à un dispositif mécanique de déplacement permet la réalisation d'un filament de résine visqueuse épousant la forme de la pièce à réaliser. Ledit filament est solidifié peu après son dépôt sur la pièce en cours de réalisation par l'intermédiaire d'un rayonnement adéquat émis par une source de lumière liée à ladite buse. Toutefois, du fait de la nécessité de déplacer physiquement la buse et la source lumineuse, les vitesses de fabrication restent bien inférieures à celles accessibles par les techniques modernes de projection ou de balayage laser.

Le type de transformations effectuées dans le cadre des machines de prototypage rapide ne se limite pas à des photopolymérisations ou photoréticulations de résines liquides. Par exemple, la découpe de feuilles de papier ou l'agglomération de poudres (plastiques, métalliques, mélanges, etc...) à l'aide d'un laser sont des techniques couramment utilisées pour réaliser des pièces en prototypage rapide. Il existe également des procédés de prototypage rapide qui, au lieu de mettre en oeuvre la lumière, fonctionnent par ajout de matière. On citera par exemple le procédé développé au M.I.T. et décrit dans l'ouvrage "Rapid Prototyping & Manufacturing - Fundamentals of Stereolithography" (Paul F. Jacobs, publié par "Society of Manufacturing Engineers", page 409), dans lequel la solidification locale de couches de poudre de céramiques est effectuée par apport d'un liant aqueux sous forme de gouttelettes éjectées par des buses.

Le document EP-A-0 431 924 décrit également ce procédé.

Le document EP-A-0 554 033 décrit un procédé utilisant le principe du pochoir : des masques correspondant à la forme des couches à réaliser sont découpés par laser, puis utilisés en combinaison avec différents dispositifs d'éjection de matière comparables à des pistolets à peinture. Les pièces sont ainsi réalisées par couches successives, chaque couche étant formée par de la matière éjectée par l'un des dispositifs d'éjection. Il est possible également de réaliser, en même temps que la pièce, une gangue de matière complémentaire (différente de celle constituant la pièce), ladite gangue ayant une fonction de support pour les couches ultérieures, et étant finalement éliminée après réalisation de l'ensemble des couches.

Malgré la grande variété des matériaux utilisés, des types de transformation, des dispositifs pour effectuer les transformations et des dispositifs pour effectuer les phases de recouvrement, on peut toutefois relever quelques caractéristiques communes à la grande majorité des machines de prototypage rapide opérationnelles actuellement.

En effet, les transformations de matière sont toujours induites, pour des raisons d'accessibilité physique, par la face dite "libre" de la couche en cours de traitement (par opposition à la face dite "cachée", qui est en contact avec la couche précédente). En théorie, il est possible de réaliser des transformations sur l'ensemble de la surface définie par la face libre, mais bien souvent le dispositif utilisé pour effectuer les transformations locales ne permet, par construction, d'avoir accès qu'à une portion de cette face libre, qui sera appellée, dans la suite de la présente description "champ de travail".

Une autre caractéristique commune à la majorité des machines de prototypage rapide est l'utilisation d'un racleur même dans le cas des machines utilisant la technique de l'agglomération de poudres ou de la découpe de feuilles de papier. En règle générale, le racleur se présente sous forme d'un assemblage de pièces mécaniques de forme allongée, en général sensiblement rectiligne, animées ou non d'un mouvement propre, entrant en contact directement ou indirectement (par exemple par l'intermédiaire d'éléments de brosses) avec la matière première située au voisinage de la surface libre ; ledit assemblage est mis en mouvement à l'aide d'un dispositif motorisé sensiblement parallèlement à la surface libre de matière première. Pour mettre en place une nouvelle couche sur l'ensemble du champ de travail, il est nécessaire de faire suivre au racleur une trajectoire dont l'amplitude est suffisante pour balayer la majeure partie du champ de travail.

Le dispositif induisant les transformations ne permet pas toujours d'émettre des particules ou des rayonnements électromagnétiques simultanément en direction de l'ensemble des points constituant le champ de travail. En effet, dans le cas, par exemple, d'un dispositif utilisant un faisceau laser couplé à un système de déflexion par miroirs galvanométriques, les transformations sont effectuées en pilotant le déplacement du point d'impact du faisceau laser sur le champ de travail, pour réaliser un tracé de vecteurs successifs, dont l'ensemble correspond à la géométrie de la section à transformer. Par contre, lorsque l'on utilise un dispositif basé sur le principe des vidéo-projecteurs modernes, c'est-à-dire constitués d'une lampe, d'un dispositif optique, et d'un masque dynamique, il est possible de provoquer un éclairement simultané de l'ensemble du champ de travail, à condition, toutefois, que les éléments mécaniques du racleur ne fassent pas obstacle aux photons incidents, auquel cas il y a une ombre portée sur ledit champ de travail. Cet effet d'ombre, s'il est fortuit, risque de perturber l'action du dispositif induisant les transformations, même dans le cas du tracé de vecteurs successifs, ce qui a pour conséquence des défauts substantiels sur les pièces réalisées. Or, dans la majorité des machines, l'ensemble des degrés de liberté du racleur et du dispositif induisant les transformations est tel, qu'une synchronisation appropriée du pilotage de ces organes est indispensable pour éviter les dommages susceptibles de survenir en raison de l'effet d'ombre. Lorsque ce sont des particules de matière qui sont émises, il ne s'agit pas d'une réelle "ombre" au sens commun du terme, pour des raisons d'homogénéité de la terminologie, on continuera néanmoins dans la suite de la description à parler de contrainte due à "l'effet d'ombre", même si le racleur ne constitue pas dans ce cas un obstacle à un rayonnement lumineux, mais un obstacle à un flux de particules de matière.

Dans le brevet US-A-5 204 823, on a certes décrit une machine de prototypage rapide qui supprime l'effet d'ombre, en rendant solidaires le racleur et le dispositif pour effectuer les transformations : mais cette solution impose une mobilité du dispositif induisant les transformations, ce qui est incompatible avec (ou trop coûteux pour) la plupart des sources lumineuses et des systèmes optiques courants.

La solution la plus largement répandue pour gérer l'effet d'ombre consiste à effectuer une succession séquentielle des phases de transformation et des phases de recouvrement, le racleur étant à l'arrêt pendant les phases de transformation, dans une position telle que l'ensemble du champ de travail soit accessible par le dispositif induisant les transformations, et aucune transformation n'étant effectuée lorsque le racleur est en mouvement. En général la trajectoire du racleur au cours de la fabrication est un cycle d'aller-retour entre deux positions d'arrêt opposées par rapport au champ de travail. Pour chaque phase de recouvrement, le racleur effectue un mouvement allant de l'une à l'autre desdites positions d'arrêt, agissant ainsi sur l'ensemble du champ de travail.

Une telle manière de procéder possède certes l'avantage d'être très simple à mettre en oeuvre, mais constitue un handicap majeur en termes de productivité de la machine, et de coûts d'utilisation. En effet, malgré les efforts constants des constructeurs, la vitesse maximale de déplacement du racleur reste relativement faible, en raison des contraintes liées au comportement rhéologique des matières premières, ce qui engendre une durée minimale de la phase de recouvrement. Cette vitesse maximale est de l'ordre de quelques centimètres par seconde, ce qui signifie, par exemple, pour un champ de travail carré de 500 mm de côté, une durée de chaque phase de recouvrement de l'ordre de quelques secondes à quelques dizaines de secondes. Or, pour réaliser avec un état de surface acceptable des pièces ayant un volume moyen correspondant à un cube de 300 mm de côté, des milliers de couches sont à mettre en place, et par conséquent, quelle que soit l'efficacité du dispositif induisant les transformations, plusieurs heures de fonctionnement de machine sont nécessaires. De plus, par exemple dans le cas de l'utilisation de lampes ou de lasers, les photons sont émis continûment pendant toute la durée de la fabrication car un fonctionnement discontinu de ce type de sources est très nuisible à leur durée de vie, d'où il résulte un coût énergétique bien supérieur à celui qui correspondrait à l'usage effectif de toute l'énergie lumineuse.

La durée relative des phases de recouvrement par rapport à celle des phases de transformation dépend de nombreux paramètres (réactivité de la matière première, puissance du dispositif induisant les transformations, taille du champ de travail, forme des pièces, etc...), mais en règle générale ces deux durées sont du même ordre de grandeur, ce qui se traduit par un rendement énergétique et une productivité limitée à environ 50 % du potentiel théorique. Si on met en oeuvre des dispositifs plus efficaces pour effectuer les phases de transformation, le gain de temps maximal à espérer sur la durée totale de fabrication est donc de 50 % (durée incompressible des phases de recouvrement), ce qui est relativement négligeable par rapport à la chute de rendement qui en découle .

Il était donc nécessaire de trouver un nouveau procédé et un nouveau dispositif permettant de réduire très substantiellement la durée des phases de recouvrement. L'invention a pour but de proposer un procédé de ce type, et de proposer un nouveau dispositif pour remplacer le classique racleur, ce dispositif ayant, en outre, pour avantage de pouvoir être constitué d'une pluralité de racleurs classiques dont les performances sont connues et éprouvées.

La présente invention a, en conséquence, pour objet un procédé de prototypage rapide pour la production de pièces industrielles par transformation de volumes successifs de matière première d'un premier état en un deuxième état au moyen d'un dispositif induisant ladite transformation, ledit procédé comportant une répétition d'un cycle comprenant les étapes suivantes :
- phase de transformation de la matière première dans au moins une partie d'un champ de travail grâce au dispositif induisant la transformation,
- phase de recouvrement de la matière transformée par de la matière non transformée, ladite phase de recouvrement utilisant au moins un racleur mis en mouvement pour effectuer les différentes phases de recouvrement,
le dispositif induisant la transformation étant disposé de telle sorte que le racleur ou l'un au moins des racleurs constitue, à un instant donné, un obstacle qui empêche ledit dispositif de produire des transformations dans au moins une partie du champ de travail dite "zone d'ombre de l'instant considéré",
caractérisé par le fait qu'au moins à un instant donné de l'un desdits cycles, on fait agir le dispositif induisant la transformation de façon à produire une transformation dans au moins une zone du champ de travail située à l'intérieur de la portion du champ de travail délimitée par le contour continu et fermé de plus faible longueur contenant l'ensemble des zones d'ombre de l'instant considéré, que l'on assure ensuite le déplacement dudit racleur ou desdits racleurs de façon à permettre audit dispositif induisant les transformations de produire des transformations dans au moins une portion de l'une au moins des zones d'ombre de l'instant précédant ledit déplacement, et que l'on assure une succession de transformations et de déplacements du racleur ou de l'un au moins des racleurs pour achever le cycle considéré.

Dans un premier mode de réalisation, le dispositif induisant la transformation émet au moins un rayonnement électromagnétique pour transformer la matière première, par exemple un rayonnement lumineux, cohérent ou non, un faisceau d'électrons, de rayons X ou de rayons γ.

Dans un second mode de réalisation, le dispositif induisant la transformation émet des particules de matière pour transformer la matière première, par exemple de la colle, un catalyseur ou de l'eau.

Pour les deux modes de réalisation ci-dessus indiqués, on préfère que la matière première se présente dans son premier état sous forme de liquide, de pâte, de feuilles ou de poudre plus ou moins fine.

On peut également prévoir qu'à au moins un instant donné d'un cycle, les phases de transformation et de recouvrement soient effectuées au moins en partie simultanément.

A un instant au moins de l'un desdits cycles, on peut faire évoluer la disposition géométrique relative des éléments constituant le racleur si celui-ci est unique, ou la disposition géométrique relative des racleurs lorsqu'on utilise une pluralité de racleurs.

Avantageusement, on décompose le volume de la pièce à fabriquer soit par subdivision de chaque section complète de la pièce en parties élémentaires sur chacune desquelles on produit un volume élémentaire en une seule phase de transformation, soit par division d'une section complète de la pièce en plusieurs sous-sections, chaque sous-section comportant une pluralité de parties élémentaires, les parties élémentaires des différentes sous-sections étant imbriquées dans la section complète et un volume élémentaire étant produit au droit de chaque partie élémentaire par une seule phase de transformation, tous les volumes élémentaires d'une même sous-section étant produits par une seule phase de transformation et à un moment différent de celui où l'on produit les volumes élémentaires d'une autre sous-section, pour imbriquer les volumes élémentaires des différentes sous-sections dans une direction perpendiculaire à ladite section de pièce.

On utilise avantageusement un logiciel pour optimiser la fabrication tenant compte de la forme de ladite pièce.

L'invention a également pour objet un dispositif pour la mise en oeuvre du procédé ci-dessus défini, ce dispositif comprenant :
- un dispositif induisant la transformation de la matière première,
- éventuellement un conteneur pour contenir la matière première,
- des moyens pour déplacer les volumes déjà transformés par rapport au champ de travail,
- des moyens pour effectuer les phases de recouvrement utilisant un ou plusieurs racleurs, le ou lesdits racleurs étant mis en mouvement sensiblement parallèlement au champ de travail au cours des phases de recouvrement par l'intermédiaire de moyens de guidage et d'entraînement,
caractérisé par le fait que les pièces mécaniques constituant le ou les racleurs sont disposées de sorte que, à un instant donné, une partie au moins desdites pièces mécaniques constitue un obstacle qui empêche la transformation pouvant être induite à l'instant considéré par le dispositif induisant les transformations d'atteindre le champ de travail, empêchant ainsi ledit dispositif d'effectuer des transformations sur au moins une portion du champ de travail dite "zone d'ombre de l'instant considéré",
et par le fait que les dites pièces mécaniques sont disposées de sorte qu'il existe au moins un interstice entre lesdites pièces mécaniques constituant ledit obstacle, ledit interstice permettant au dispositif d'effectuer des transformations, à l'instant considéré, sur une zone située à l'intérieur de la portion du champ de travail délimitée par le contour continu et fermé de plus faible longueur contenant l'ensemble des "zones d'ombre" de l'instant considéré, ladite zone étant prête à subir une transformation à la suite d'une phase de recouvrement.

Dans un mode préféré de réalisation du dispositif selon l'invention, le dispositif induisant la transformation est constitué d'au moins une lampe combinée avec au moins un masque dynamique, c'est-à-dire contrôlable par ordinateur et fonctionnant par transmission ou par réflexion.

Dans un autre mode de réalisation, on utilise au moins deux racleurs de forme sensiblement rectiligne disposés parallèlement entre eux pendant au moins une partie d'un cycle de fabrication et entraînés simultanément par un même moteur.

Dans un autre mode de réalisation, on utilise une pluralité de racleurs de forme rectiligne disposés en étoile.

On peut prévoir que le racleur, ou au moins l'un des racleurs soit mis en mouvement selon une trajectoire fermée parcourue sans inversion de sens.

On peut également utiliser au moins deux racleurs pouvant être mis en mouvement de façon indépendante.

Dans une variante, dans laquelle le dispositif induisant la transformation est un émetteur de rayonnement électromagnétique, on utilise des pièces mécaniques opaques audit rayonnement, lesdites pièces mécaniques provoquant un effet d'ombre coïncidant au moins partiellement avec les mouvements du (ou des) racleur(s).

Dans une autre variante, le dispositif comporte un moyen de pilotage pour piloter les phases de transformation pour tenir compte des zones à masquer ou à éclairer.

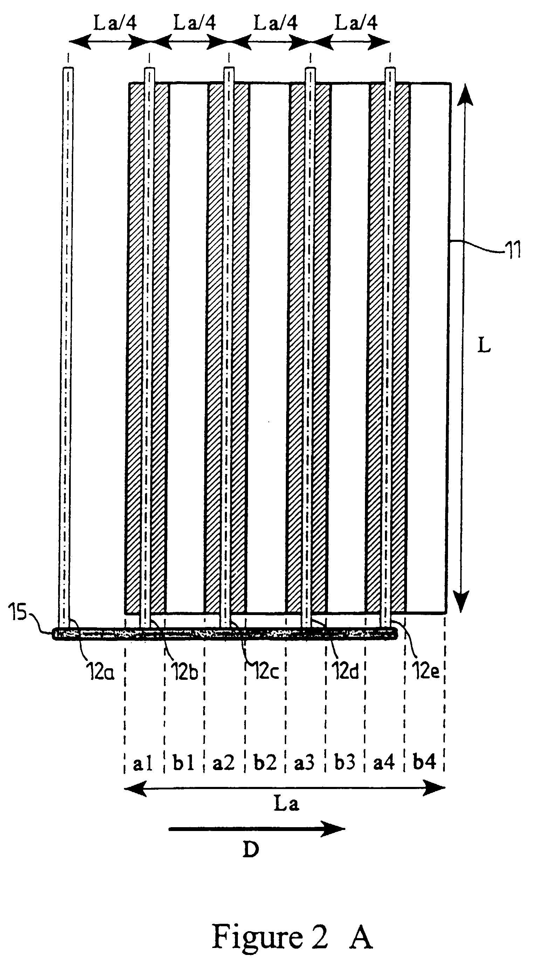

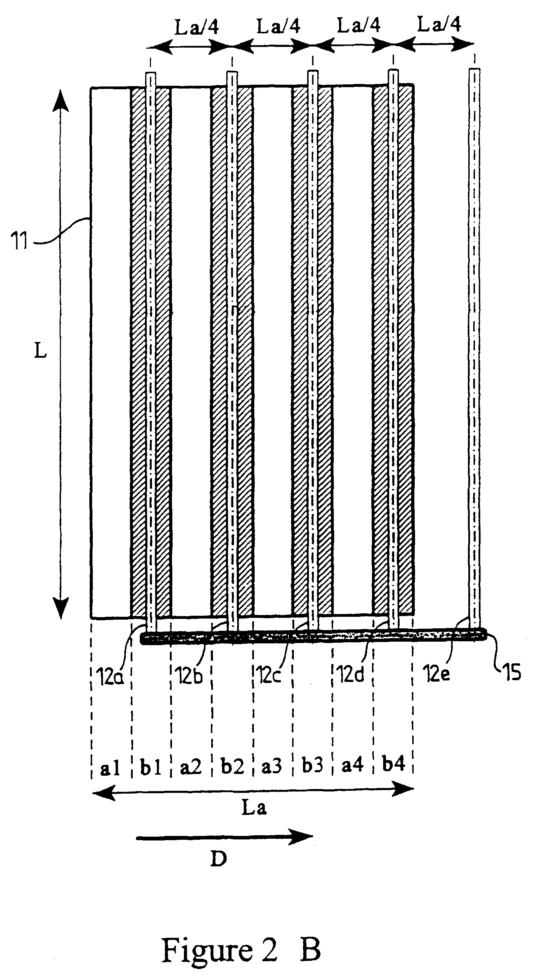

Selon un premier exemple de mise en oeuvre de l'invention correspondant notamment aux figures 2A et 2B, on pourra décomposer un champ de travail de forme rectangulaire en bandes complémentaires de forme rectangulaire, ayant chacune pour propriété de pouvoir contenir l'ensemble des points concernés par l'effet d'ombre provoqué par un racleur classique de forme rectiligne à un instant donné. On dispose une pluralité de racleurs rectilignes sensiblement parallélement entre-eux de façon à obtenir une alternance de bandes entièrement utilisables pour effectuer des transformations (c'est-à-dire ne contenant aucun point concerné par l'effet d'ombre) et de bandes partiellement concernées par l'effet d'ombre. On peut, dans ces conditions, effectuer des transformations sur l'ensemble de la portion du champ de travail constituée par l'ensemble des bandes utilisables. On déplace ensuite simultanément l'ensemble des racleurs pour obtenir une nouvelle disposition telle que les bandes partiellement inaccessibles à l'étape précédente deviennent accessibles, et réciproquement, les bandes entièrement accessibles à l'étape précédente deviennent partiellement inaccessibles. On peut alors effectuer des transformations sur l'ensemble de la portion du champ de travail constituée par l'ensemble des bandes rendues utilisables. On déplace alors à nouveau les racleurs pour revenir à la disposition initiale. Cette suite d'opérations permet d'effectuer des transformations sur l'ensemble du champ de travail, malgré l'effet d'ombre produit par la pluralité de racleurs mis en oeuvre, mais en deux étapes successives au lieu d'une phase de transformation en une seule étape. De même, la phase de recouvrement est réalisée en deux étapes, lorsque l'on déplace les racleurs. Il suffit ensuite de répéter ce cycle d'opérations autant de fois qu'il est nécessaire pour réaliser la pièce.

L'avantage de ce procédé est qu'il permet de réduire considérablement la contrainte d'amplitude sur la trajectoire à faire suivre à chaque racleur pour réaliser un cycle de fabrication, par rapport à celle qui est imposée par l'emploi d'un racleur unique. Or comme cette trajectoire est suivie simultanément par l'ensemble des racleurs, il est clair qu'à vitesse de déplacement égale, on réduit substantiellement la durée des phases de recouvrement par rapport au procédé classique.

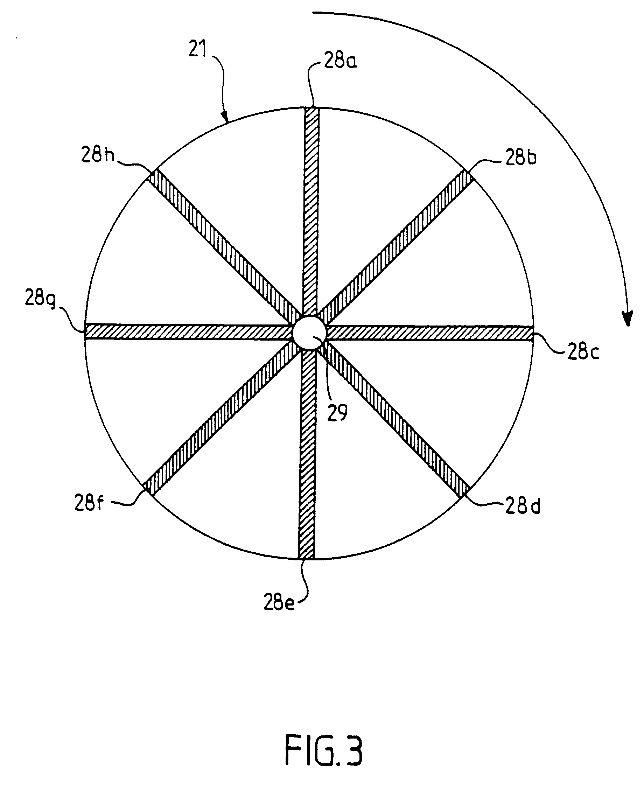

Un autre exemple de mise en oeuvre de l'invention correspondant notamment à la figure 3 consiste à utiliser une pluralité de racleurs disposés en forme d'étoile pour le cas d'un champ de travail de forme circulaire. Il s'agit dans ce cas d'effectuer un découpage dudit champ de travail en secteurs complémentaires, et de réaliser une disposition des racleurs permettant d'obtenir une alternance de secteurs utilisables (pas d'effet d'ombre) et de secteurs partiellement inutilisables, et de procéder de manière similaire à celle décrite dans le cas d'un champ de travail découpé en bandes complémentaires.

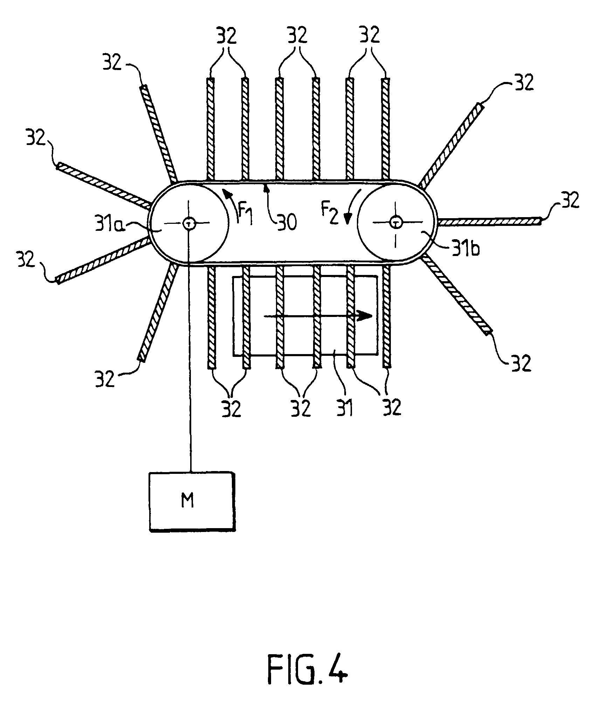

Une variante correspondant notamment à la figure 4 consiste à mettre en oeuvre un dispositif de guidage et d'entraînement pour déplacer les racleurs selon une trajectoire fermée parcourue sans inversion de sens, lesdits racleurs étant disposés entre-eux de façon à permettre la mise en oeuvre du procédé selon l'invention.

Le surcoût induit par la multiplication des racleurs citée dans les exemples ci-dessus est faible (dans une machine classique le coût d'un racleur est faible par rapport aux autres composants), d'autant plus qu'il ne nécessite pas de multiplier les organes de guidage et les moteurs correspondants. En effet, on peut facilement relier l'ensemble des racleurs à une pièce mécanique commune, ladite pièce étant reliée à un moteur unique, et guider lesdits racleurs à l'aide d'un organe de guidage commun. Lorsque plusieurs racleurs sont solidarisés par l'intermédiaire d'un lien mécanique (rigide ou souple), on peut considérer que l'ensemble mécanique ainsi formé constitue un racleur unique particulier.

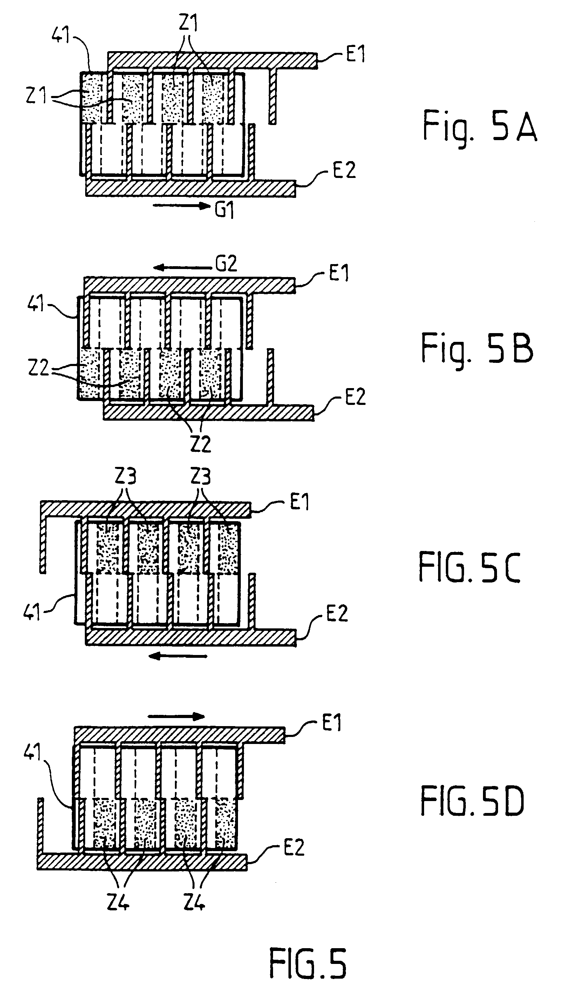

Selon l'invention, on peut utiliser par exemple deux racleurs en forme de peigne pouvant être mis en mouvement de façon indépendante. Comme cela est décrit dans la figure 5, un tel dispositif permet de réaliser simultanément des phases de transformation et des phases de recouvrement.

Jusqu'à présent, dans la présente description, on a envisagé de piloter le dispositif pour effectuer les transformations en tenant compte de l'effet d'ombre induit par des éléments du dispositif pour effectuer les phases de recouvrement. Or, si l'on utilise des éléments mécaniques opaques à des rayonnements émis par le dispositif induisant la transformation, permettant de provoquer un effet d'ombre synchronisé avec celui provoqué par le(s) racleur(s) (par exemple en solidarisant lesdits éléments mécaniques avec les racleurs), on peut se permettre de procéder aux phases de transformation de manière classique, la décomposition en volumes successifs étant provoquée par les différentes positions prises par lesdits éléments opaques au cours de la fabrication. Cette dernière variante a pour intérêt de simplifier le pilotage du procédé.

Selon l'invention, il est utile de réaliser un dispositif pour effectuer les phases de recouvrement permettant de modifier au cours de la fabrication, la forme du (ou des) racleur(s) ou, quand on met en oeuvre plusieurs racleurs, la disposition relative des racleurs entre-eux au cours de la fabrication. En effet, cette flexibilité peut permettre, en utilisant un logiciel adapté, d'optimiser la gestion de la fabrication en fonction de la forme de la pièce à réaliser en profitant au maximum de l'opportunité d'effectuer des recouvrements en temps masqué dans certaines parties du champ de travail, pendant que des transformations sont effectuées simultanément dans d'autres parties dudit champ de travail, lesdites parties pouvant évoluer au cours de la fabrication en fonction de la géométrie des volumes à transformer.

Pour mieux faire comprendre l'objet de l'invention, on va en décrire maintenant, à titre d'exemples purement illustratifs et non limitatifs, plusieurs modes de réalisation représentés sur le dessin annexé.

Sur ce dessin :
- les figures 1A, 1B, 1C représentent une vue schématique de trois étapes du procédé de l'état de la technique ;
- les figures 2A et 2B représentent schématiquement la mise en oeuvre du procédé en utilisant une pluralité de racleurs rectilignes parallèles entre eux ;
- la figure 3 représente schématiquement un arrangement de plusieurs racleurs rectilignes en étoile ;
- la figure 4 représente schématiquement un dispositif pour faire suivre à une pluralité de racleurs une trajectoire fermée sans inversion de sens ;
- les figures 5A à 5D représentent les étapes d'un procédé de fabrication de pièces permettant d'effectuer simultanément des phases de recouvrement et des phases de transformation ;
- les figures 6A à 6E représentent schématiquement les étapes d'un procédé mettant en oeuvre une décomposition en volumes élémentaires ;
- les figures 7A à 7F représentent schématiquement les étapes d'un autre procédé mettant en oeuvre une décomposition en volumes élémentaires ;
- la figure 8 représente en perspective et de façon schématique une vue d'ensemble d'une machine permettant la mise en oeuvre de l'invention.

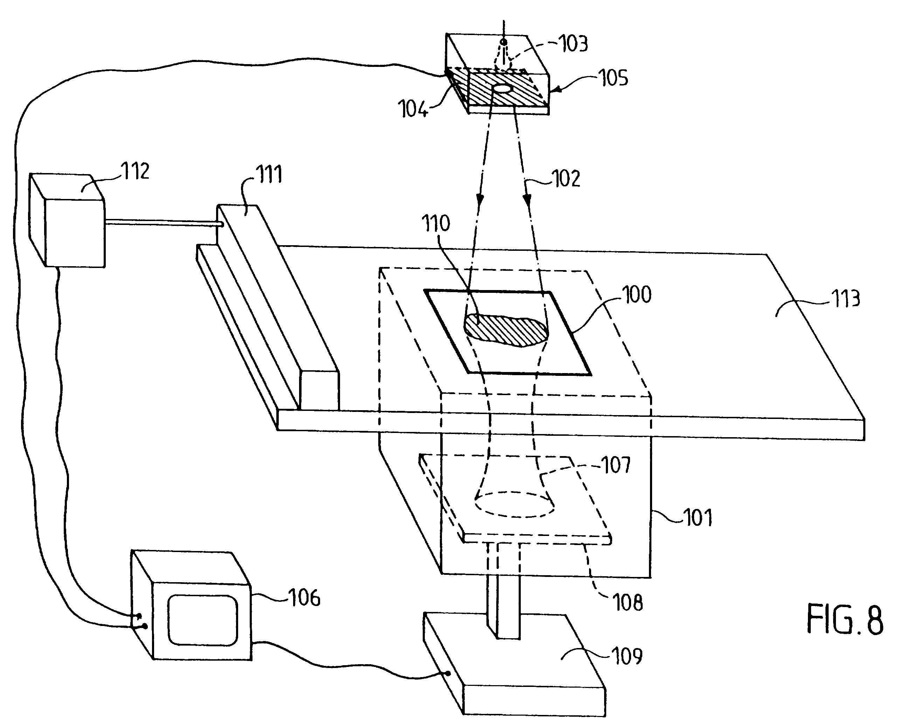

Dans l'exemple de mise en oeuvre représenté sur la figure 8, on voit que la machine de prototypage rapide comporte un conteneur 101 dans lequel est mise en place une résine polymérisable sous l'action du rayonnement 102 émis par une lampe 103. La lampe 103 est associée à un masque 104 pour constituer un dispositif induisant la transformation 105 de la machine. La commande du masque 104 est effectuée grâce à un ordinateur 106 et détermine les zones de la surface de la résine qui sont à chaque instant éclairées par le rayonnement 102 à l'intérieur d'un champ de travail 100. La machine est destinée à l'obtention d'une pièce dont on suppose, sur la figure 8, une partie 107 déjà réalisée ; cette partie 107 repose sur un plateau mobile 108 dont l'enfoncement progressif dans le conteneur 101 est commandé grâce à un système de guidage et d'entraînement 109 par l'ordinateur 106. La dernière section de la pièce que l'on a polymérisée à la surface libre de la résine dans le champ de travail 100, a été désignée par 110. Après chaque polymérisation d'une couche élémentaire, on assure le recouvrement de la section 110 après enfoncement du plateau 108 au moyen d'un racleur translatable 111 qui étale la résine sur la section 110 ; le mouvement du racleur 111 sur le plateau 113 de la machine est commandé par un actuateur 112, qui est lui-même piloté par l'ordinateur 106. Une telle machine, connue en soi, permet la mise en oeuvre du procédé selon l'invention.

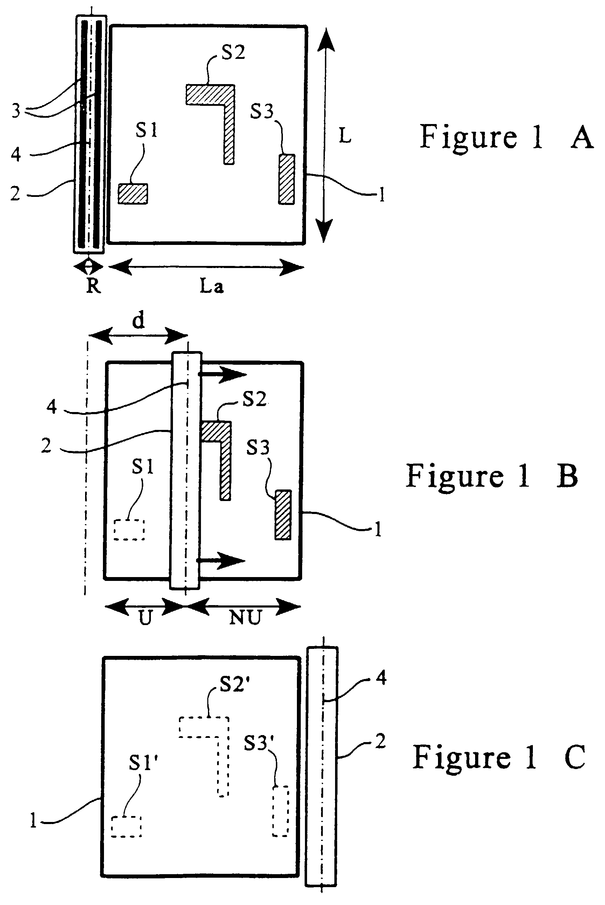

Sur les figures 1A-1C est représenté en plan un champ de travail 1 rectangulaire de longueur L et de largeur La (La < L). Un racleur unique 2 est composé de deux pièces mécaniques 3 entrant en contact avec la matière première. Le racleur est de forme sensiblement rectiligne, disposé parallèlement à l'un des côtés du champ de travail, sa longueur étant telle qu'un mouvement de direction sensiblement perpendiculaire à sa ligne moyenne 4 suffise à provoquer l'action de mise en place de la couche désirée sur la totalité de la surface du champ de travail.

La figure 1A représente la situation pendant une phase de transformation. La section à réaliser est représentée par l'ensemble des trois zones hachurées S1, S2, et S3. On remarque que le racleur est à l'arrêt, et est placé de sorte qu'aucune de ses parties ne produise un effet d'ombre sur le champ de travail (on suppose que le dispositif induisant les transformations, non représenté, est situé au-dessus du champ de travail).

La figure 1B représente une vue instantanée de la période pendant laquelle le racleur est mis en mouvement horizontal selon les flèches. Ce mouvement est réalisé parallèlement aux petits côtés du champ de travail ; à l'instant représenté, le racleur a déjà parcouru une distance d depuis sa position de départ. A ce moment, l'ensemble des points de S1 (représenté non hachuré) a déjà subi l'action du racleur, c'est-à-dire qu'une nouvelle couche de matière a été établie au-dessus de la partie S1 de la couche venant d'être transformée, ainsi d'ailleurs que, sur toute la portion du champ de travail désignée par U sur la figure et située à gauche du racleur (c'est-à-dire "derrière" le racleur par rapport au sens du mouvement). Le racleur coïncide partiellement avec la zone S2 venant d'être transformée. Il est clair qu'à cet instant, il n'est pas possible de procéder à la transformation de l'ensemble de la couche suivante pour deux raisons :
- le racleur 2 produit un effet d'ombre sur une partie du champ de travail ;
- sur la partie désignée par NU du champ de travail, composée, d'une part, d'une zone masquée par le racleur et, d'autre part, par toute la partie du champ de travail située à droite du racleur (c'est-à-dire "devant" celui-ci par rapport au sens du mouvement), la nouvelle couche de matière n'a pas encore été complètement mise en place.

C'est pourquoi la solution généralement adoptéee consiste à poursuivre le mouvement du racleur jusqu'à ce qu'il arrive à la position représentée sur la figure 1C, avant de procéder à de nouvelles transformations sélectives. Cette nouvelle position d'arrêt est telle que la totalité du champ de travail est à gauche du racleur (pas d'effet d'ombre) ; la nouvelle section à transformer est représentée par les zones S1', S2', S3' dont les contours sont dessinés en pointillé. Il est alors possible de procéder à la transformation de la nouvelle section, de sorte que l'on se retrouve dans un cas de figure très similaire à celui de la figure 1A. Après avoir réalisé la nouvelle phase de transformation, il suffit de provoquer le mouvement inverse du racleur (de droite à gauche sur la figure 1C), pour mettre en place la couche suivante. Dans cette représentation du fonctionnement séquentiel classique d'un procédé de prototypage rapide, on constate qu'il existe une distance minimale à parcourir par le racleur pour recouvrir l'ensemble du champ de travail : cette amplitude minimale du mouvement est ici égale à La+R, R étant la largeur du racleur.

Sur les figures 2A et 2B est représenté un exemple de mise en oeuvre du procédé selon l'invention ; on utilise une pluralité de racleurs rectilignes disposés parallèlement entre-eux. Le champ de travail 11 est de longueur L et de largeur La. Cinq racleurs numérotés 12a à 12e sont maintenus par un élément de liaison 15 de manière que la distance entre les axes de deux racleurs consécutifs soit de La/4. Le champ de travail est constitué de bandes parallèles adjacentes a1, b1, a2, b2, a3, b3, a4, b4. Au départ, les racleurs sont dans la position indiquée par la figure 2A, c'est-à-dire que le racleur 12b est entièrement contenu dans la bande a1, de même que 12c dans a2, 12d dans a3, et 12e dans a4. Le racleur 12a est en dehors du champ 11. Les bandes b1, b2, b3, et b4 ne subissent aucun effet d'ombre alors que les bandes a1 ... a4 sont dans l'ombre des racleurs 12b à 12e respectivement. On peut donc effectuer une phase de transformation sur les bandes b1 à b4. Ensuite, on déplace les racleurs d'une distance 3 La/8 selon la direction D, pour arriver à la position de la figure 2B, où 12a est entièrement contenu dans la bande b1, 12b dans b2, 12c dans b3, et 12d dans b4. C'est maintenant 12e qui est en dehors du champ 11. Au cours de ce déplacement, le racleur 12a effectue la phase de recouvrement pour la bande a1, de même que 12b pour la bande a2, 12c pour a3, et 12d pour a4. On se retrouve donc dans la figure 2B dans une situation où les bandes a1, a2, a3, et a4 viennent toutes de subir une phase de recouvrement, et sont toutes libres de tout effet d'ombre. On peut donc effectuer sur elles une phase de transformation. Ensuite, on déplace de nouveau les ensembles racleurs d'une distance égale à 3 La/8, mais cette fois dans la direction inverse de D, de manière à se retrouver dans la position de la figure 2A, dans laquelle les bandes b1, b2, b3, et b4 ne subissent aucun effet d'ombre. Au cours de ce déplacement, 12b effectue la phase de recouvrement de la bande b1, de même que 12c pour la bande b2, 12d pour b3, et 12e pour b4. On est donc bien revenu à la position de départ permettant d'effectuer la phase de transformation sur b1, b2, b3, et b4. Il suffit de répéter ce cycle pour fabriquer la totalité de la pièce. La capacité du procédé selon l'invention de résoudre l'effet d'ombre (ici permanent) tout en restant plus efficace que le procédé classique est donc bien démontrée, car la course totale des racleurs est de 2 fois 3 La/8 ; cette course est inférieure à (La + R) nécessaire dans le procédé de l'état de la technique non soumis à l'effet d'ombre permanent. On a intérêt à mettre un nombre n supérieur à 5 de racleurs pour augmenter encore le gain, en s'assurant que R est bien inférieur ou égal à La/(2(n-1)), et en effectuant une course totale de 3(La/(n-1)), toujours inférieure à (La + R) si n est supérieur ou égal à 4.

La figure 3 montre un exemple de disposition de plusieurs racleurs dans le cas où le champ de travail 21 est circulaire. Huit racleurs, numérotés 28a à 28h, sont assemblés en forme d'étoile, autour d'un moyeu 29 dont l'axe est fixé au centre du champ 21. Un dispositif d'entraînement met en rotation l'ensemble 29, 28a à 28h autour de l'axe du moyeu 29, ce qui permet d'effectuer la mise en place d'une nouvelle couche de matière en environ un huitième de tour, au lieu d'un tour complet si on n'utilisait qu'un seul racleur. L'ensemble 29, 28a à 28h est un racleur de forme particulière.

Sur la figure 4 est représenté un dispositif permettant de mettre en mouvement une pluralité de racleurs selon une trajectoire fermée sans inversion de sens. Les racleurs 32 sont rendus solidaires les uns des autres par l'intermédiaire d'une courroie 30, qui est guidée et entraînée par deux poulies 31a et 31b mises en rotation selon le sens indiqué par les flèches F1 et F2. Un seul moteur M, lié à la poulie 31a suffit ainsi à produire le déplacement simultané de l'ensemble des racleurs 32 selon une trajectoire fermée parcourue sans inversion de sens. Au cours de leur trajectoire, les différents racleurs 32 passent successivement au-dessus du champ de travail 31, et l'on a en permanence une pluralité de racleurs disposés parallèlement entre-eux situés au-dessus de celui-ci. Un tel dispositif permet donc de procéder de manière analogue à celle décrite pour les figures 2A et 2B.

Sur les figures 5A à 5B sont représentées les étapes d'un procédé de fabrication de pièces permettant d'effectuer simultanément des phases de recouvrement et des phases de transformation. Le champ de travail est délimité pour cet exemple par le contour 41, et est divisé (lignes pointillées) en 16 carreaux disjoints et complémentaires. Deux groupes de racleurs distincts (E1 et E2) agencés en forme de "peigne", sont affectés chacun à deux moitiés du champ de travail (composées chacune de 8 carreaux). Sur la figure SA, la situation est telle que E2 est en mouvement selon la flèche G1. Les 4 carreaux grisés désignés par Z1 ne sont pas partiellement masqués, ni par les racleurs à l'arrêt de E1, ni par ceux de E2 en cours de déplacement selon le sens indiqué par la flèche. Il est donc possible de procéder à des transformations (pas d'effet d'ombre) sur la portion du champ 41 représentée par la réunion des 4 carreaux grisés Z1.

La figure 5B représente l'étape suivante du cycle proposé, considérant que toutes les transformations relatives aux carreaux Z1 (de la figure 5A) sont terminés, et que E2 a terminé son mouvement, de sorte que :
- E2 a atteint sa position d'arrêt coïncidant avec la position représentée sur la figure 5B,
- l'action du groupe de racleurs E2 au cours de son mouvement (pendant la phase précédente représentée par la figure 5A) a permis d'obtenir un effet de recouvrement adéquat sur la portion du champ 41 représentée par les 4 carreaux grisés Z2. On peut donc procéder à des transformations sur ces derniers 4 carreaux Z2 pendant que le groupe de racleurs E1 est mis en mouvement (selon le sens de la flèche G2), puisque les racleurs de ce groupe ont une trajectoire telle qu'ils ne provoquent pas d'effet d'ombre sur les zones délimitées par les 4 carreaux grisés Z2.

Les figures 5C et 5D représentent la suite des étapes à suivre, respectant des conditions analogues à celles de 5A et 5B, à savoir que l'un des deux peignes est en mouvement et qu'il existe un ensemble de 4 carreaux sur lequel on peut effectuer des transformations (Z3 pour 5C, Z4 pour 5D). On remarquera que les étapes 5A à 5D peuvent être répétées de manière cyclique, de sorte que, lors de chaque cycle, la totalité du champ de travail puisse subir des transformations, et que la totalité du champ de travail puisse bénéficier d'une action de recouvrement induite par des racleurs et nécessaire à la mise en oeuvre du procédé.

La simultanéité des phases de recouvrement et des phases de transformation est ainsi acquise, et pour peu que, dans chacune des étapes 5A à 5D, la durée de la phase de transformation soit telle que le "peigne" en mouvement (E1 pour les étapes 5B et 5D, E2 pour les étapes 5A et 5C) puisse atteindre sa position d'arrêt avant la fin de la phase de transformation, les phases de recouvrement auront été réalisées en temps masqué.

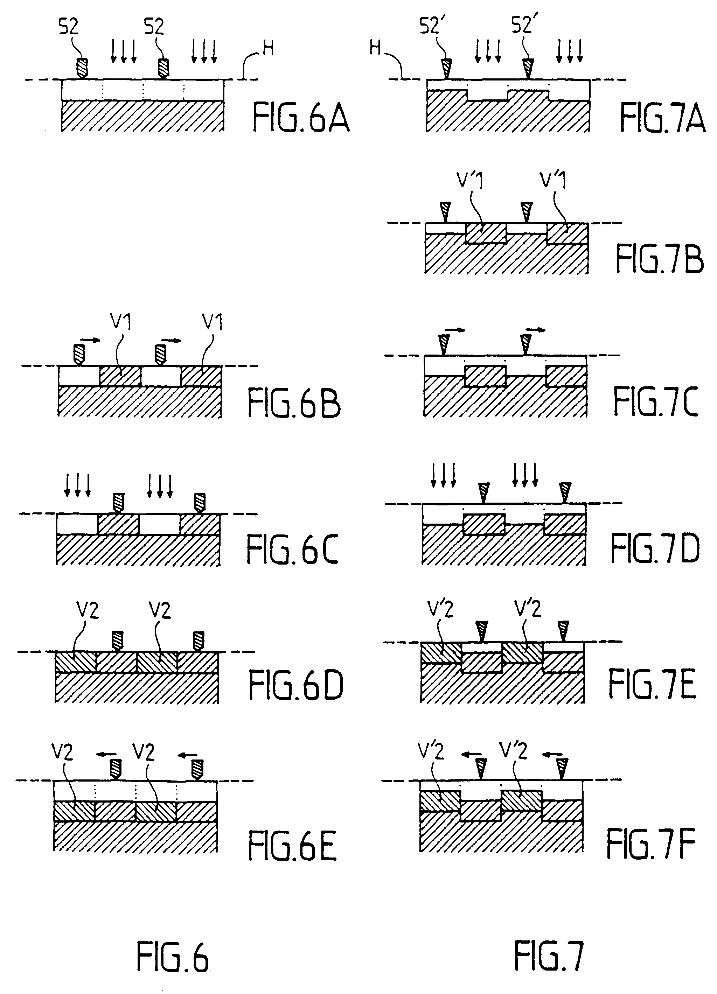

Sur les figures 6A à 6E, d'une part, et 7A à 7F, d'autre part, sont représentées schématiquement deux manières de réaliser des pièces selon le procédé de l'invention. Les étapes successives (figures 6A à 6E) correspondant à la réalisation des pièces selon un découpage de chaque section complète de la pièce en parties élémentaires sur chacune desquelles on produit des volumes élémentaires (V1, V2). Sur les figures 7A à 7F, est représentée la succession des schémas (de haut en bas) relatifs aux étapes successives d'un procédé correspondant à un découpage par "sections incomplètes imbriquées" dans lequel les volumes élémentaires créés à chaque phase de transformation sont décalés dans une direction perpendiculaire à la section de pièce considérée.

Les différents schémas sont à comprendre comme des coupes verticales dans lesquelles apparaissent :
- des parties hachurées désignant les volumes de matière déjà transformés ;
- une ligne pointillée (désignée par la lettre H à la première étape) représentant la coupe du champ de travail. Implicitement, toute la zone non hachurée située au dessous de cette ligne représente de la matière première non transformée ;
- des racleurs désignés par 52 et 52'. On notera que la forme des racleurs 52 est différente de celle des racleurs 52', pour symboliser le fait que le choix du mode de décomposition peut être lié au type de racleurs utilisés.

Le caractère cyclique de la succession des étapes est suggéré par la relative similitude entre les schémas des première et dernière étapes. La première étape représente une phase de transformation au cours de laquelle les racleurs 52, 52' sont fixes, et des transformations locales (symbolisées par les triple flèches verticales) sont effectuées. Ces transformations sont limitées à des zones au-dessus desquelles on n'a pas d'effet d'ombre. L'étape de la figure 6B et les étapes des figures 7B, 7C, représentent une phase de recouvrement. On fait apparaître les volumes hachurés V1 et V'1 consécutifs aux transformations effectuées lors de la première étape. Les flèches horizontales (figures 6B et 7C) indiquent la mise en mouvement des racleurs 52 et 52'. L'étape des figures 6C et 7D correspond à une nouvelle phase de transformation analogue à celle de la première étape. La dernière étape (figures 6E, 7F) correspond à une phase de recouvrement, où sont représentés, comme pour l'étape des figures 6B, 7C, les volumes V2 et V'2 réalisés au cours de la phase de transformation de l'étape des figures 6C, 7D. On remarquera sur l'étape des figures 6E, 7F que l'agencement des volumes réalisés au cours du cycle est différent :
- V1 et V2 sont à la même altitude et constituent par leur réunion un volume très semblable à celui qu'on aurait pu obtenir par un procédé classique, c'est-à-dire en fait une section horizontale de la pièce.
- V'1 et V'2 ne sont pas à la même altitude, mais constituent séparément un volume assimilable à une section classique de pièce, partiellement réalisée. L'effet de "créneau" qui en résulte n'empêche pas d'obtenir finalement la forme de la pièce désirée ; simplement le découpage est légèrement différent du découpage classique. On parlera dans ce cas de "sections incomplètes imbriquées".

## Revendications

1. Procédé de prototypage rapide pour la production de pièces industrielles par transformation de volumes successifs de matière première d'un premier état en un deuxième état au moyen d'un dispositif induisant ladite transformation (105), ledit procédé comportant une répétition d'un cycle comprenant les étapes suivantes :
- phase de transformation de la matière première dans au moins une partie d'un champ de travail (1, 11, 21, 31, 41, 100) grâce au dispositif induisant la transformation (105),
- phase de recouvrement de la matière transformée par de la matière non transformée, ladite phase de recouvrement utilisant au moins un racleur (2, 12a-12e, 28a-28h, 32, E1, E2, 52, 52', 111) mis en mouvement pour effectuer les différentes phases de recouvrement, le dispositif induisant la transformation (105) étant disposé de telle sorte que le racleur ou l'un au moins des racleurs (2, 12a-12e, 28a-28h, 32, E1, E2, 52, 52', 111) constitue, à un instant donné, un obstacle qui empêche ledit dispositif (105) de produire des transformations dans au moins une partie du champ de travail dite "zone d'ombre de l'instant considéré",
caractérisé par le fait qu'au moins à un instant donné de l'un desdits cycles, on fait agir le dispositif induisant la transformation (105) de façon à produire une transformation dans au moins une zone du champ de travail (1, 11, 21, 31, 41, 100) située à l'intérieur de la portion du champ de travail délimitée par le contour continu et fermé de plus faible longueur contenant l'ensemble des zones d'ombre de l'instant considéré, que l'on assure ensuite le déplacement dudit racleur ou desdits racleurs (2, 12a-12e, 28a-28h, 32, E1, E2, 52, 52') de façon à permettre audit dispositif induisant les transformations de produire des transformations dans au moins une portion de l'une au moins des zones d'ombre de l'instant précédant ledit déplacement, et que l'on assure une succession de transformations et de déplacements du racleur ou de l'un au moins des racleurs pour achever le cycle considéré.

2. Procédé selon la revendication 1, caractérisé par le fait que le dispositif induisant la transformation (105) émet au moins un rayonnement électromagnétique pour transformer la matière première.

3. Procédé selon la revendication 1, caractérisé par le fait que le dispositif induisant la transformation émet des particules de matière pour transformer la matière première.

4. Procédé selon l'une des revendications 1 à 3, caractérisé par le fait que la matière première se présente, dans son premier état, sous une forme de liquide, de pâte, de feuilles ou de poudre.

5. Procédé selon l'une des revendications 1 à 4, caractérisé par le fait que, à au moins un instant donné d'un cycle, les phases de transformation et de recouvrement sont effectuées au moins en partie simultanément.

6. Procédé selon l'une des revendications 1 à 5, caractérisé par le fait que, à un instant au moins de l'un desdits cycles, on fait évoluer la disposition géométrique relative des éléments constituant le racleur si celui-ci est unique, ou la disposition géométrique relative des racleurs lorsqu'on utilise une pluralité de racleurs.

7. Procédé selon l'une des revendications 1 à 6, caractérisé par le fait que l'on décompose le volume de la pièce à fabriquer par subdivision de chaque section complète de la pièce en parties élémentaires sur chacune desquelles on produit un volume élémentaire en une seule phase de transformation.

8. Procédé selon l'une des revendications 1 à 6, caractérisé par le fait que l'on décompose le volume de la pièce à fabriquer par division d'une section complète de la pièce en plusieurs sous-sections, chaque sous-section comportant une pluralité de parties élémentaires, les parties élémentaires des différentes sous-sections étant imbriquées dans la section complète et un volume élémentaire étant produit au droit de chaque partie élémentaire par une seule phase de transformation, tous les volumes élémentaires d'une même sous-section étant produits par une seule phase de transformation et à un moment différent de celui où l'on produit les volumes élémentaires d'une autre sous-section, pour imbriquer les volumes élémentaires des différentes sous-sections dans une direction perpendiculaire à ladite section de pièce.

9. Dispositif pour la mise en oeuvre du procédé selon l'une des revendications 1 à 8, comprenant :
- un dispositif induisant la transformation (105) de la matière première,
- éventuellement un conteneur (101) pour contenir la matière première,
- des moyens (108, 109) pour déplacer les volumes déjà transformés (V1, V2, V'1, V'2, 107) par rapport au champ de travail (1, 11, 21, 31, 41, 100),
- des moyens pour effectuer les phases de recouvrement utilisant un ou plusieurs racleurs (2, 12a-12e, 28a-28h, 32, E1, E2, 52, 52', 111), le ou lesdits racleurs étant mis en mouvement sensiblement parallèlement au champ de travail (1, 11, 21, 31, 41, 100) au cours des phases de recouvrement par l'intermédiaire de moyens de guidage et d'entraînement (29, M, 30, 31a, 31b, 112),
caractérisé par le fait que les pièces mécaniques constituant le ou les racleurs (2, 12a-12e, 28a-28h, 32, E1, E2, 52, 52', 111) sont disposées de sorte que, à un instant donné, une partie au moins desdites pièces mécaniques constitue un obstacle qui empêche la transformation pouvant être induite à l'instant considéré par le dispositif induisant les transformations (105) d'atteindre le champ de travail (1, 11, 21, 31, 41, 100), empêchant ainsi ledit dispositif (105) d'effectuer des transformations sur au moins une portion du champ de travail (1, 11, 21, 31, 41, 100) dite "zone d'ombre de l'instant considéré",
et par le fait que lesdites pièces mécaniques sont disposées de sorte qu'il existe au moins un interstice (b1, b2, b3 ; a2, a3, a4) entre lesdites pièces mécaniques constituant ledit obstacle, ledit interstice permettant au dispositif (105) d'effectuer des transformations, à l'instant considéré, sur une zone située à l'intérieur de la portion du champ de travail (1, 11, 21, 31, 41, 100) délimitée par le contour continu et fermé de plus faible longueur contenant l'ensemble des "zones d'ombre" de l'instant considéré, ladite zone étant prête à subir une transformation à la suite d'une phase de recouvrement.

10. Dispositif selon la revendication 9, caractérisé par le fait que le dispositif induisant la transformation (105) est constitué d'au moins une lampe (103) et d'au moins un masque dynamique (104).

11. Dispositif selon l'une des revendications 9 ou 10, caractérisé par le fait qu'il comporte au moins deux racleurs (12a-12e) sensiblement rectilignes disposés parallèlement entre eux pendant au moins une partie d'un cycle de fabrication et entraînés simultanément par un même moteur (M).

12. Dispositif selon l'une des revendications 9 ou 10, caractérisé par le fait qu'il utilise une pluralité de racleurs (28a-28h) de forme rectiligne disposés en étoile.

13. Dispositif selon l'une des revendications 9 à 12, caractérisé par le fait que le racleur, ou au moins l'un des racleurs (32) est mis en mouvement selon une trajectoire fermée parcourue sans inversion de sens.

14. Dispositif selon l'une des revendications 9 à 13, caractérisé par le fait qu'il utilise au moins deux racleurs (E1-E2) pouvant être mis en mouvement de façon indépendante.

15. Dispositif selon l'une des revendications 9 à 14, dans lequel le dispositif induisant la transformation (105) est un émetteur de rayonnement électromagnétique (102), caractérisé par le fait qu'il comporte des pièces mécaniques opaques audit rayonnement, lesdites pièces mécaniques provoquant un effet d'ombre coïncidant au moins partiellement avec les mouvements du racleur ou des racleurs.

## Patentansprüche

1. Prototyp-Schnellbauverfahren zur Herstellung von industriellen Bauteilen durch Umwandlung von aufeinanderfolgenden Volumina eines Werkstoffs von einem ersten Zustand in einen zweiten Zustand mittels einer Vorrichtung zum Induzieren der Umwandlung (105), wobei das Verfahren eine Wiederholung eines Zyklusses aufweist, der die folgenden Schritte umfaßt:
- Umwandlungsphase des Werkstoffs in wenigstens einem Teil eines Arbeitsfeldes (1, 11, 21, 31, 41, 100) mitttels der Vorrichtung zum Induzieren der Umwandlung (105),
- Bedeckungsphase des umgewandelten Materials durch nicht-umgewandeltes Material, wobei in der Bedeckungsphase wenigstens ein Abstreifer (2, 12a-12e, 28a-28h, 32, E1, E2, 52, 52', 111) verwendet wird, dessen Bewegung die verschiedenen Bedeckungsphasen bewirkt, wobei die Vorrichtung zum Induzieren der Umwandlung (105) so angeordnet ist, daß der Abstreifer oder wenigstens der eine der Abstreifer (2, 12a-12e, 28a-28h, 32, E1, E2, 52, 52', 111) zu einem bestimmten Zeitpunkt ein Hindernis bildet, welches die Vorrichtung (105) daran hindert, Umwandlungen in wenigstens einem Teil des Arbeitsfeldes, welches als "Schattenzone zum betrachteten Zeitpunkt" bezeichnet wird, zu bewirken,
dadurch gekennzeichnet, daß man die Vorrichtung zum Induzieren der Umwandlung (105) zu wenigstens einem bestimmten Zeitpunkt in dem einen der Zyklen so arbeiten läßt, daß eine Umwandlung in wenigstens einer Zone des Arbeitsfeldes (1, 11, 21, 31, 41, 100) durchgeführt wird, welche sich im Inneren des Abschnitts des Arbeitsfeldes befindet, der von der kontinuierlichen und geschlossenen Kontur mit kleinster Länge begrenzt wird, welche die Gruppe der Schattenzonen des betrachteten Zeitpunkts enthält, daß man anschließend die Verschiebung des Abstreifers oder der Abstreifer (2, 12a-12e, 28a-28h, 32, E1, E2, 52, 52') derart bewirkt, daß die Vorrichtung zum Induzieren der Umwandlungen Umwandlungen in wenigstens einem Abschnitt der wenigstens einen Schattenzone des der Verschiebung vorausgegangenen Zeitpunkts erzeugen kann, und daß man eine Folge von Umwandlungen und Verschiebungen des Abstreifers oder wenigstens eines der Abstreifer bewirkt, um den betrachteten Zyklus zu vollenden.

2. Verfahren gemäß Anspruch 1, dadurch gekennzeichnet, daß die Vorrichtung zum Induzieren der Umwandlung (105) wenigstens einen elektromagnetischen Strahl zum Umwandlung des Werkstoffs aussendet.

3. Verfahren gemäß Anspruch 1, dadurch gekennzeichnet, daß die Vorrichtung zum Induzieren der Umwandlung Materiepartikel zum Umwandeln des Werkstoffs aussendet.

4. Verfahren gemäß einem der Ansprüche 1 bis 3, dadurch gekennzeichnet, daß der Werkstoff in seinem ersten Zustand in Form einer Flüssigkeit, einer Paste, einer Folie oder eines Pulvers vorliegt.

5. Verfahren gemäß einem der Ansprüche 1 bis 4, dadurch gekennzeichnet, daß zu wenigstens einem bestimmten Zeitpunkt eines Zyklusses die Umwandlungs- und Bedeckungsphasen wenigstens teilweise gleichzeitig durchgeführt werden.

6. Verfahren gemäß einem der Ansprüche 1 bis 5, dadurch gekennzeichnet, daß man zu wenigstens einem Zeitpunkt des einen der Zyklen die relative geometrische Anordnung der den Abstreifer bildenden Bauteile, wenn dies der einzige ist, oder die relative geometrische Anordnung der Abstreifer, wenn man mehrere Abstreifer verwendet, fortentwickelt.

7. Verfahren gemäß einem der Ansprüche 1 bis 6, dadurch gekennzeichnet, daß man das Volumen des herzustellenden Bauteils durch Unterteilung jedes vollständigen Querschnitts des Bauteils in Elementarteile zerlegt, wobei man auf jedem von diesen in einer einzigen Umwandlungsphase ein Elementarvolumen erzeugt.

8. Verfahren gemäß einem der Ansprüche 1 bis 6, dadurch gekennzeichnet, daß man das Volumen des herzustellenden Bauteils durch Teilen eines vollständigen Querschnitts des Bauteils in mehrere Unterquerschnitte zerlegt, wobei jeder Unterquerschnitt mehrere Elementarteile aufweist, wobei die Elementarteile verschiedener Unterquerschnitte in dem vollständigen Querschnitt überlappen und ein Elementarvolumen auf Höhe jedes Elementarteils durch eine einzige Umwandlungsphase erzeugt wird, wobei alle Elementarvoluminia desselben Unterquerschnitts durch eine einzige Umwandlungsphase und zu einem Zeitpunkt erzeugt werden, der von demjenigen verschieden ist, zu dem man die Elementarvolumina eines anderen Unterquerschnitts erzeugt, um die Elementarvolumina von verschiedenen Unterquerschnitten in einer zum Querschnitt des Bauteils senkrechten Richtung zu überlappen.

9. Vorrichtung zur Durchführung des Verfahrens gemäß einem der Ansprüche 1 bis 8, mit:
- einer Vorrichtung zum Induzieren der Umwandlung (105) des Werkstoffs,
- gegebenenfalls einem Behälter (101) zur Aufnahme des Werkstoffs,
- Mitteln (108, 109) zum Verschieben der bereits umgewandelten Voluminia (V1, V2, V'1, V'2, 107) bezüglich des Arbeitsfeldes (1, 11, 21, 31, 41, 100),
- Mitteln zur Durchführung der Bedeckungsphasen unter Verwendung von einem oder mehreren Abstreifern (2, 12a-12e, 28a-28h, 32, E1, E2, 52, 52', 111), wobei der oder die Abstreifer während der Bedeckungsphasen durch Führungs- und Zugmittel (29, M, 30, 31a, 31b, 112) im wesentlichen parallel zum Arbeitsfeld (1, 11, 21, 31, 41, 100) bewegt werden, dadurch gekennzeichnet, daß die mechanischen Bauteile, die den oder die Abstreifer (2, 12a-12e, 28a-28h, 32, E1, E2, 52, 52', 111) bilden, so angeordnet sind, daß zu einem bestimmten Zeitpunkt wenigstens ein Teil der mechanischen Bauteile ein Hindernis bildet, welches verhindert, daß die Umwandlung zu dem betrachteten Zeitpunkt durch die Vorrichtung zum Induzieren der Umwandlungen (105) durch Erreichen des Arbeitsfeldes (1, 11, 21, 31, 41, 100) bewirkt werden kann, und so die Vorrichtung (105) daran hindert, Umwandlungen auf wenigstens einem Teil des Arbeitsfeldes (1, 11, 21, 31, 41, 100), welcher als "Schattenzone zum betrachteten Zeitpunkt" bezeichnet wird, zu bewirken,
und dadurch daß die mechanischen Bauteile so angeordnet sind, daß zwischen den das Hindernis bildenden mechanischen Bauteilen wenigstens ein Zwischenraum (b1, b2, b3; a2, a3, a4) existiert, wobei der Zwischenraum der Vorrichtung (105) ermöglicht, zu dem betrachteten Zeitpunkt Umwandlungen in einem Bereich durchzuführen, der sich im Inneren des Abschnitts des Arbeitsfeldes (1, 11, 21, 31, 41, 100) befindet, der von dem kontinuierlichen und geschlossenen Umfang mit kleinster Länge begrenzt wird, welcher die Gruppe der "Schattenzonen" des betrachteten Zeitpunktes enthält, wobei dieser Bereich im Anschluß an eine Bedeckungsphase einer Umwandlung unterzogen werden kann.

10. Vorrichtung gemäß Anspruch 9, dadurch gekennzeichnet, daß die Vorrichtung zum Induzieren der Umwandlung (105) aus wenigstens einer Lampe (103) und wenigstens einer dynamischen Maske (104) besteht.

11. Vorrichtung gemäß einem der Ansprüche 9 oder 10, dadurch gekennzeichnet, daß sie wenigstens zwei im wesentlichen geradlinige Abstreifer (12a-12e) aufweist, die wenigstens während eines Teils eines Herstellungszyklusses parallel zueinander angeordnet sind und gleichzeitig durch denselben Motor (M) angetrieben werden.

12. Vorrichtung gemäß einem der Ansprüche 9 oder 10, dadurch gekennzeichnet, daß sie mehrere geradlinige Abstreifer (28a-28h) verwendet, die sternförmig angeordnet sind.

13. Vorrichtung gemäß einem der Ansprüche 9 bis 12, dadurch gekennzeichnet, daß der Abstreifer oder wenigstens einer der Abstreifer (32) gemäß einer geschlossenen Trajektorie bewegt wird, die ohne Richtungsumkehr durchlaufen wird.

14. Vorrichtung gemäß einem der Ansprüche 9 bis 13, dadurch gekennzeichnet, daß sie wenigstens zwei Abstreifer (E1-E2) verwendet, welche unabhängig voneinander bewegt werden können.

15. Vorrichtung gemäß einem der Ansprüche 9 bis 14, wobei die Vorrichtung zum Induzieren der Umwandlung (105) ein Sender für elektromagnetische Strahlung (102) ist, dadurch gekennzeichnet, daß sie mechanische Bauteile aufweist, welche für die Strahlung undurchlässig sind, wobei die mechanischen Bauteile eine Schattenwirkung hervorrufen, welche wenigstens teilweise mit den Bewegungen des Abstreifers oder der Abstreifer übereinstimmt.

## Claims

1. Rapid prototyping process for the production of industrial components by the transformation of successive volumes of raw material from a first state into a second state by means of a device (105) which induces the said transformation, the said process including a repetition of a cycle comprising the following steps:
- a phase of transforming the raw material in at least part of a working field (1, 11, 21, 31, 41, 100) by means of the transformation-inducing device (105),
- a phase of covering the transformed material with untransformed material, the said covering phase using at least one doctor blade (2, 12a-12e, 28a-28h, 32, E1, E2, 52, 52', 111) set in motion in order to carry out the various covering phases,
the transformation-inducing device (105) being arranged in such a way that, at a given instant, the doctor blade or at least one of the doctor blades (2, 12a-12e, 28a-28h, 32, E1, E2, 52, 52', 111) constitutes an obstacle which prevents the said device (105) from producing transformations in at least one part of the working field called "shadow region of the instant in question",
characterized in that, at least at a given instant of one of the said cycles, the transformation-inducing device (105) is made to act so as to produce a transformation in at least one region of the working field (1, 11, 21, 31, 41, 100) located within that portion of the working field which is bounded by the shortest closed and continuous contour containing the set of shadow regions of the instant in question, in that the said doctor blade or blades (2, 12a-12e, 28a-28h, 32, E1, E2, 52, 52') is/are then moved so as to allow the said transformation-inducing device to produce transformations in at least one portion of at least one of the shadow regions of the instant proceding the said movement, and in that the doctor blade or at least one of the doctor blades undergoes/undergo a succession of transformations and of movements in order to complete the cycle in question.

2. Process according to Claim 1, characterized in that the transformation-inducing device (105) emits at least one type of electromagnetic radiation in order to transform the raw material.

3. Process according to Claim 1, characterized in that the transformation-inducing device emits particles of matter in order to transform the raw material.

4. Process according to one of Claims 1 to 3, characterized in that the raw material, in its first state, is in the form of liquid, paste, sheets or powder.

5. Process according to one of Claims 1 to 4, characterized in that, at least at a given instant in a cycle, the transformation and covering phases are carried out at least partly simultaneously.

6. Process according to one of Claims 1 to 5, characterized in that, at at least one instant in one of the said cycles, it is possible to vary the relative geometrical arrangement of the elements making up the doctor blade if the latter is a single doctor blade, or the relative geometrical arrangement of the doctor blades when a number of doctor blades is used.

7. Process according to one of Claims 1 to 6, characterized in that the volume of the component to be manufactured is decomposed by subdividing each complete section of the component into elementary parts, on each of which an elementary volume is produced in a single transformation phase.

8. Process according to one of Claims 1 to 6, characterized in that the volume of the component to be manufactured is decomposed by dividing a complete section of the component into several subsections, each subsection comprising a plurality of elementary parts, the elementary parts of the various subsections being imbricated in the complete section and an elementary volume being produced in line with each elementary part by a single transformation phase, all the elementary volumes of the same subsection being produced by a single transformation phase and at a time different from that at which the elementary volumes of another subsection are produced, in order to imbricate the elementary volumes of the various subsections in a direction perpendicular to the said section of the component.

9. Device for implementing the process according to one of Claims 1 to 8, comprising:
- a device (105) inducing the transformation of the raw material,
- optionally, a container (101) for containing the raw material,
- means (108, 109) for moving the already transformed volumes (V1, V2, V'1, V'2, 107) with respect to the working field (1, 11, 21, 31, 41, 100),
- means for carrying out the covering phases using one or more doctor blades (2, 12a-12e, 28a-28h, 32, E1, E2, 52, 52', 111), the said doctor blade(s) being set in motion approximately parallel to the working field (1, 11, 21, 31, 41, 100) during the covering phases by means of guiding and driving means (29, M, 30, 31a, 31b, 112),
characterized in that the mechanical components making up the doctor blade or doctor blades (2, 12a-12e, 28a-28h, 32, E1, E2, 52, 52', 111) are arranged so that, at a given instant, at least one part of the said mechanical components constitutes an obstacle which prevents the transformation, able to be induced at the instant in question by the transformation-inducing device (105), from reaching the working field (1, 11, 21, 31, 41, 100), thus preventing the said device (105) from carrying out transformations over at least one portion of the working field (1, 11, 21, 31, 41, 100) called the "shadow region of the instant in question",
and in that the said mechanical components are arranged so that there is at least one gap (b1, b2, b3; a2, a3, a4) between the said mechanical components making up the said obstacle, the said gap allowing the device (105) to carry out transformations, at the instant in question, over a region lying within that portion of the working field (1, 11, 21, 31, 41, 100) which is bounded by the shortest closed and continuous contour containing the set of "shadow regions" of the instant in question, the said region being ready to undergo a transformation after a covering phase.

10. Device according to Claim 9, characterized in that the transformation-inducing device (105) consists of at least one lamp (103) and of at least one dynamic mask (104).

11. Device according to either of Claims 9 and 10, characterized in that it includes at least two approximately rectilinear doctor blades (12a-12e) arranged so as to be mutually parallel during at least one part of a manufacturing cycle and driven simultaneously by the same motor (M).

12. Device according to either of Claims 9 and 10, characterized in that it uses a plurality of doctor blades (28a-28h) of rectilinear shape arranged in the form of a star.

13. Device according to one of Claims 9 to 12, characterized in that the doctor blade, or at least one of the doctor blades (32), is set in motion along a closed path travelled without direction reversal.

14. Device according to one of Claims 9 to 13, characterized in that it uses at least two doctor blades (E1-E2) which can be set in motion independently.

15. Device according to one of Claims 9 to 14, in which the transformation-inducing device (105) is an electromagnetic radiation emitter (102), characterized in that it includes mechanical components opaque to the said radiation, the said mechanical components causing a shadow effect which at least partially coincides with the movements of the doctor blade or blades.
